(19) Europäisches Patentamt
European Patent Office
Office européen des brevets

(11) **EP 2 015 345 B1**

(12) **EUROPEAN PATENT SPECIFICATION**

(45) Date of publication and mention
of the grant of the patent:
**23.10.2013 Bulletin 2013/43**

(51) Int Cl.:
***G01N 27/62*** *(2006.01)*    ***H01J 49/42*** *(2006.01)*

(21) Application number: **08009516.9**

(22) Date of filing: **23.05.2008**

(54) **Ion mobility analyzer comprising ion trap**

Ionen-Mobilitäts-Spektrometer mit einer Ionenfalle

Analyseur de mobilité ionique utilisant un piège à ions

(84) Designated Contracting States:
**DE FR GB IT**

(30) Priority: **29.06.2007   JP 2007171378**

(43) Date of publication of application:
**14.01.2009   Bulletin 2009/03**

(73) Proprietor: **Hitachi Ltd.**
**Chiyoda-ku**
**Tokyo 100-8280 (JP)**

(72) Inventors:
• **Baba, Takashi**
**Tokyo 100-8220 (JP)**

• **Satake, Hiroyuki**
**Tokyo 100-8220 (JP)**
• **Nagano, Hisashi**
**Tokyo 100-8220 (JP)**

(74) Representative: **Strehl Schübel-Hopf & Partner**
**Maximilianstrasse 54**
**80538 München (DE)**

(56) References cited:
**EP-A1- 1 102 986       GB-A- 2 395 355**
**US-A1- 2003 038 235    US-A1- 2005 127 284**
**US-B1- 6 251 282**

**Description**

BACKGROUND OF THE INVENTION

This invention relates to a mass spectrometer for identifying a molecular species contained in a specimen by identifying the mass and the charge, or in particular to a simple, inexpensive method and means for analysis of the environment, synthetic compounds, medicine, illegal drugs and hazardous objects.

Mass spectrometry is a physical method and means for analyzing the trajectory of charged particles moving in an electromagnetic field and measuring the ratio between mass and valence number (mass- to- charge ratio) of the charged particles thereby to identify the particular substance. Mass spectrometry is a substance- identifying method for measuring the mass constituting a basic physical quantity, and therefore, finds so wide an application that it is not too much to say that this technique supports the present- day science and industries. The applications of the mass spectrometry, which are limitless, include the evaluation of the atomic composition such as the material composition, the vacuum composition and the surface substances, and the identification of the molecules of living creatures such as proteins in molecular biology and biochemistry.

A multiplicity of optimum mass spectrometer means are realized and used for the aforementioned wide applications. Representative means which now find wide applications include the radio frequency ion trap, the radio frequency quadrupole mass filter, the time-offlight mass spectrometry, the focusing mass spectrometry with combined static magnetic fields and the Fourier-transform mass spectrometry using the static magnetic field or the electrostatic field. These methods are different from each other in mass resolution, mass accuracy, analysis rate, price and device size, and an optimum means is selected to meet each application requirement.

One of the conventional mass spectrometry methods is the radio frequency ion trap. Since 1956 when it was disclosed by Paul, et al. (USP2, 939, 952), this mass spectrometry method has been greatly developed and now completed as one of the most widely used mass spectrometric means ("Quadrupole Storage Mass Spectrometry: R.E. March and R.J.Hughes, John Wiley and Sons ISBN 0- 471- 85794- 7", and Quadrupole Ion Trap Mass Spectrometry: Raymond E. March and John F. Todd. Wiley- Interscience ISBN 0- 471- 488887"). The mass spectrometry means which was proposed at the earliest time in history is what is called the Paul Trap (USP2, 939, 952). This mass spectrometry means has a shape in which one donut- shaped electrode (called the ring electrode) is held between two bowl- shaped electrodes (called the end cap electrodes). By applying a radio frequency voltage to the ring electrode, ions are converged at one point in the central part thereof. Since ions are converged spatially three- dimensionally in a radio frequency electric field, this method is also called the three- dimensional trap.

Another type of the ion trap means is a linear ion trap. With the configuration having four rod electrodes arranged in parallel to each other in quadrupole form, a radio frequency voltage is applied between two opposite electrode pairs so that ions are trapped in the central area formed by the four rod electrodes. Since the two directions are converged by radio frequency, this device is also called the two-dimensional ion trap.

In both types of the device described above, a quadrupole radio frequency electric field is generated in the space formed by the electrodes thereby to form a harmonic potential in time-averagely. The basic principle of the mass spectrometry is to measure the frequency of simple harmonic oscillation of ions in the harmonic potential. The harmonic frequency and the mass-to-charge ratio of ions have a linear relation to each other. Typically, therefore, an AC electric field is applied to the ions thereby to eject the ions by resonance from the ion trap. From the frequency at the time of ejection and the detectable amount of the ejected ions, the mass-to-charge ratio and quantity of the ions are measured. The resonance width can be widened by the damping effect due to the bombardment with the gas, and therefore, a high vacuum degree (typically, 10 mTorr or less) is required to achieve a high resolution.

SUMMARY OF THE INVENTION

All the mass spectrometric analysis methods described above require a high vacuum of at least $10^{-3}$ Torr ($10^{-1}$ Pa). Specifically, in order to secure an accurate ion trajectory in the electromagnetic field, the bombardment between ions and gas should be avoided, and for this purpose, a high vacuum, or in some cases, an ultrahigh vacuum is required. For realizing this vacuum, a turbo molecular pump having a large evacuation is indispensable (the oil diffusion pump has so far been used, but at present, has been replaced by the turbo molecular pump), and in order to secure the evacuation, a large-sized pump has been used. This has led to a high price, bulkiness and the need of frequent maintenance of the mass spectrometer, thereby limiting the extension of the use of this device. In fact, the turbo pump is avoided due to the these disadvantageous factors in spite of the need of introducing the mass spectrometer as a means for detecting hazardous objects such as explosives in general-purpose applications to improve the social infrastructure.

The size reduction of the mass spectrometer, therefore, is recognized as a great subject to be achieved to extend the use of the device more for general-purpose application thereof. One measure to meet this requirement is the development of a mass spectrometer operable in low vacuum not requiring the turbo molecular pump. In low vacuum, the ion detector (electron multiplier, etc.) having the ion amplification function that has conventionally been used fails to work, and therefore, some means overcoming this problem is required. The possibility of using specimen ions detectable without the electron multiplier is an example.

An ion trap with the features of the preamble of present claim 1 is disclosed in GB 2 395 355 A. Another conventional three-dimensional ion trapping apparatus is known from EP 1 102 986 A1.

The present invention is defined by the ion mobility analyzer according to present claim 1. The dependent claims relate to preferred modifications thereof.

This application discloses a novel one-dimensional ion trap method. In this method, the charged particles are trapped by the one-dimensional potential formed by the potential due to a DC voltage and the potential due to an AC voltage. Specifically, a first electrode connected to a DC voltage source and a second electrode connected to an AC voltage source are used, and a one-dimensional potential is formed between the first and second electrodes. In order to trap and analyze the charged particles by this one-dimensional potential, the first and second electrodes are formed in such a shape as to secure a low-to-high density distribution of the force exerted on the charged particles between the first and second electrodes. The structure of this one-dimensional ion trap is formed of, for example, a substantially solid-cylindrical electrode and a substantially hollow-cylindrical electrode. The solid-cylindrical electrode and the hollow-cylindrical electrode are arranged on the same axis in such a manner that the former is surrounded by the latter. Though basically formed of a solid cylinder and a hollow cylinder, any other structure may be employed in which on the cross section along the plane perpendicular to the center axis has a shape in which the two electrodes form concentric circles, and the force exerted on the charged particles between the two electrodes has a low-to-high density distribution. Other applicable structures include a spherical electrode in place of a solid-cylindrical electrode combined with a hollow spherical electrode in place of a hollow-cylindrical electrode, and a barrel-shaped structure in which the longitudinal center of the solid-cylindrical electrode and the hollow-cylindrical electrode is expanded. In spite of these various shapes conceivable, the structure in which the inner electrode is formed of a solid cylinder and the outer electrode of a hollow cylinder is used in the description that follows. Although the following description of embodiments refers to a case in which an AC voltage is applied to the solid-cylindrical electrode and a DC voltage (electrostatic voltage) to the hollow-cylindrical electrode, the AC and DC voltages may be applied either to the solid- and the hollow-cylindrical electrodes, respectively, or to the hollow- and the solid-cylindrical electrode, respectively.

The charged particles can be trapped by applying the AC voltage and the DC voltage between the hollow-cylindrical electrode and the solid-cylindrical electrode. Especially in the case where the charged particles are ions, a radio frequency voltage of several hundred kHz to 10 MHz is used as an AC voltage. Also, depending on the charged particles (such as dust), a voltage in lower frequency may be used. The AC electric field generates the outward force (in the direction from the solid-cylindrical electrode toward the hollow-cylindrical electrode) acting on the ions. The polarity of ions (positive or negative) is not dependent on the direction of force. The inward force (from the hollow-cylindrical electrode toward the solid-cylindrical electrode) opposite to the outward force is generated by a DC voltage. In trapping positive ions, a positive potential is applied to the hollow-cylindrical electrode relative to the solid-cylindrical electrode. In trapping negative ions, on the other hand, a negative potential is applied to the hollow-cylindrical electrode relative to the solid-cylindrical electrode. These two forces are dependent on the distance from the center axis, and the position of equilibrium is determined depending on the mass-to-charge ratio (m/z) of ions. Ions are trapped at this position located on the hollow cylinder at a predetermined distance from the center axis determined by the specific electrode structure. This stabilizing position depends on the mass-to-charge ratio of ions, and therefore, ions of different m/z values, if trapped, are arranged in the shape of concentric hollow cylinders.

In the conventional ion trap method, ions are trapped at a point or on a straight line, and therefore, in the case where a multiplicity of ions are trapped, the Coulomb force of the ions mutually affect the motion thereof, thereby adversely affecting the mass resolution. Thus, the amount of ions that can be trapped is limited. In the method according to this invention, in contrast, ions are located on the surface of a concentric hollow cylinder, and therefore, a greater amount of ions than in the conventional method can be trapped while avoiding the Coulomb interaction.

Another feature of the ion trap method according to this invention is a simple electrode structure as compared with the conventional ion trap method. This makes it possible to provide an inexpensive mass spectrometric analysis means. The conventional ion trap method has many electrodes in a shape determined by a complicated formula, and further, requires a high machining accuracy. The electrodes employed in the method according to this invention, on the other hand, are only two in number on the one hand and shaped in a cylinder that can be machined easiest on the other hand. thereby providing an inexpensive mass spectrometric analysis means. Also, this mass spectrometer can be fabricated in a size not larger than about 10 cm cube.

In actually fabricating the ion trap according to this invention, ions are required to be trapped also in the direction parallel to the center axis. Otherwise, ions to be trapped would escape from this direction. To avoid this inconvenience, two methods are disclosed herein.

One is based on a configuration in which an electrically conductive cap-shaped lid electrode is arranged on end of the hollow-cylindrical electrode formed outside. The cap-shaped lid electrodes are of course electrically conducted to the hollow-cylindrical electrode. The resulting deformation of the electric field can contain the ions in the trapping area. The detail is described in the first embodiment later.

The second method consists in applying an electrostatic voltage to each of the lid electrodes independently at the ends of the hollow-cylindrical electrode without conduction with the hollow-cylindrical electrode. In trapping positive ions, a positive potential is applied to both the hollow-cylindrical electrode and the solid-cylindrical electrode, while negative ions are trapped by applying a negative potential to both the hollow-cylindrical electrode the solid-cylindrical electrode.

Now, a method of implementing the aforementioned one- dimensional ion trap as a mass spectrometric analysis means is explained. As described above with reference to the principle of the one- dimensional ion trap, ions different in $m/z$ are located on different cylinders at different radial positions which can be controlled by a radio frequency voltage and an electrostatic voltage. The ion position is changed sequentially by changing both or one of the two voltages. Then, ions come to bombard the solid- cylindrical electrode or the hollow- cylindrical electrode. In the process, an ampere meter is connected to the solid- cylindrical electrode or the hollow- cylindrical electrode to detect the bombarded charge as a current. By changing the radio frequency voltage or the electrostatic voltage while monitoring the current, ions corresponding to a set voltage value bombard the electrode and can be detected as a current. In this way, a mass spectrum can be acquired.

Further, a method of implementing the one- dimensional ion trap according to this invention as an ion mobility means is explained. First, target ions having a certain m/z identified by mass spectrometry are isolated by changing the radio frequency and the electrostatic voltage, so that ions other than those making up the target ions are bombarded with the hollow- and solid- cylindrical electrodes while leaving the target ions alone. Next, the position at which the ions exist is calculated. The value m/z of the target ions is known as explained above with reference to the principle of the one- dimensional ion trap, and therefore, the position at which ions having the m/z value are trapped can be determined by calculations to measure the ion mobility. After this preparatory process, the radio frequency voltage is reduced to zero instantaneously. Then, only the inward force due to the electrostatic voltage is applied to the ions, and therefore, the ions begin the motion toward the solid- cylindrical electrode. Since the probability that the ions and the gas bombard each other depends on the size (sectional area) of the ions. Therefore, the time before arriving at the electrode, which is affected by the bombardment with the gas in the one- dimensional ion trap, depends on the size of the ions. Based on this time, an ion species having the same m/z but a different ion size is distinguished. Also, by reducing the electrostatic voltage but not the radio frequency voltage to zero after the preparatory process, only the outward force due to the radio frequency voltage is applied to the ions, so that the ions begin the motion toward the hollow- cylindrical electrode. At the same time, the time required before arrival at the electrode, which is affected by the bombardment with the gas in the one- dimensional ion trap, depends on the size of the ions, and therefore, the ion species having the same m/z but different sizes can be distinguished.

The mass spectrometric analysis method and the ion mobility method described above are based on the static phenomenon free of resonance vibration of ions, and therefore, can work even in low vacuum. Also, in view of the fact that a greater amount of ions than in the prior art can be stored as described above with reference to the principle of the one-dimensional ion trap, the high-sensitivity ion detection means such as the electron multiplier is not required, and the ion quantity can be measured simply by detecting the ion current.

For the reason described above, the mass spectrometer with a simple exhaust system not requiring the high vacuum required in the prior art can be realized. Also, the fact that the operation in low vacuum is possible eliminates the need of the differential exhaust system connecting to a high vacuum area conventionally required for introducing the specimen ions generated in the atmosphere into the ion trap. In other words, ions can be introduced with a high efficiency, and therefore, at high speed into the one-dimensional ion trap according to this invention.

As a result, a compact, inexpensive and simple mass spectrometry means is realized in view of the facts that the operation in low vacuum is possible and no high vacuum is required unlike in the prior art, that a compact structure having a smaller number of electrodes can be machined easily, and that ions can be detected by detecting the ion current without amplification in the electron multiplier or the like. Although the ion mobility analysis means has so far been used in this pressure region, the method according to this invention can provide the true mass spectrometric analysis means, thereby improving the analysis accuracy in various applications. Further, both the mass spectrometry can be conducted and the ion mobility can be measured in the same ion trap, and therefore, the analysis higher in accuracy is made possible.

Other objects, features and advantages of the invention will become apparent from the following description of the embodiments of the invention taken in conjunction with the accompanying drawings.

BRIEF DESCRIPTION OF THE DRAWINGS

Fig. 1 is a diagram for explaining the electrode structure and the basic circuit of the one-dimensional ion trap according to this invention.

Fig. 2 is a diagram for explaining the ion trap potential of the one-dimensional ion trap according to this invention.

Figs. 3A and 3B are diagrams for explaining the electrode structure for trapping ions along the center axis of the one-dimensional ion trap according to this invention.

Figs. 4A and 4B are diagrams for explaining the potential for trapping ions along the center axis of the one-dimensional ion trap according to this invention.

Fig. 5 is a diagram showing the result of calculation of the trajectory of ions introduced.

Figs. 6A and 6B are diagrams showing the ion stabilizing area in the one-dimensional ion trap.

Fig. 7 is a diagram showing an one-dimensional ion trap which is not part of the invention.

Fig. 8 is a diagram showing the difference in ion trajectory due to the difference in ion mobility in the one-dimensional ion trap according to this invention.

## DETAILED DESCRIPTION OF THE INVENTION

The basic matters of the one-dimensional ion trap according to this invention are explained with reference to a first section. A second section which is not part of the invention deals with the form of operation using the one-dimensional ion trap according to this invention as a mass spectrometric analysis means. In a third section, the form of operation using the one-dimensional ion trap according to this invention as an ion mobility means is explained.

[First section]

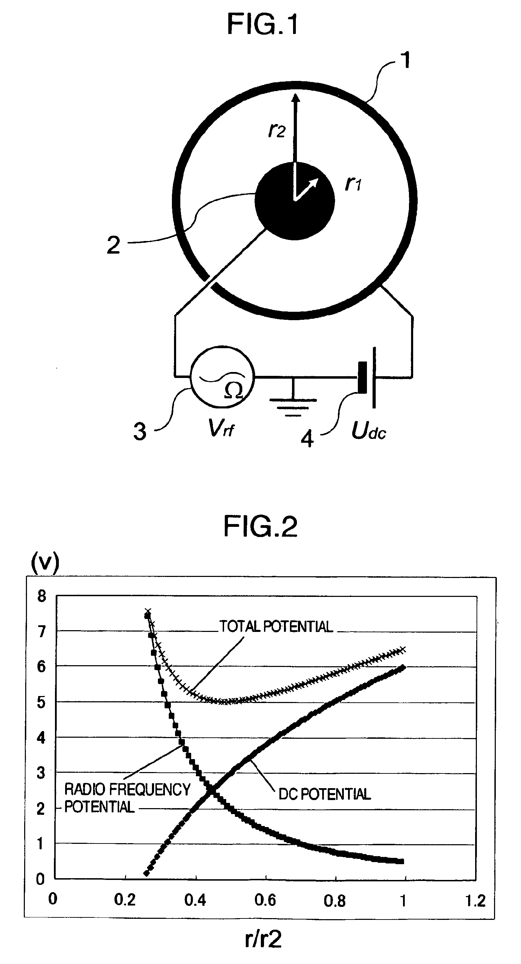

This section deals with the basic matters of the one-dimensional ion trap including a solid-cylindrical electrode (inner electrode) formed of a solid cylinder and a hollow-cylindrical electrode (outer electrode) formed of a hollow cylinder. The electrode structure includes the hollow-cylindrical electrode 1 (radius: $r_2$) and the solid-cylindrical electrode (radius: $r_1$) arranged on the same axis. A radio frequency voltage (amplitude Vrf, frequency $\Omega/2\pi$) is applied to the solid-cylindrical electrode using a radio frequency voltage power supply 3, where the DC bias of the rf voltage should be zero, while a DC voltage (Udc) is applied to the hollow-cylindrical electrode using a DC voltage power supply 4, where the rf voltage of the DC voltage should be zero. The aforementioned arrangement in terms of voltage is shown in Fig. 1.

First, the motion of ions with the electrode arrangement and voltage described above is theoretically described. The potential formed between the two electrodes is dependent on the distance r from the center axis and given by the equation below.

$$\phi(t,r) = \frac{\log r/r_1}{\log r_2/r_1}\left(V_{rf}\cos\Omega t + U_{dc}\right) \qquad (1)$$

Upon application of this potential, the potential for generating the force acting on ions in time average is given as

$$\Phi(r) = \frac{Ze}{4m\Omega^2}\bar{E}_0^2 + \frac{\log r/r_1}{\log r_2/r_1}U_{dc}$$

$$= \frac{Ze}{4m\Omega^2}\left(\frac{1}{\log r_2/r_1}\right)^2\frac{V_{rf}^2}{r^2} + \frac{\log r/r_1}{\log r_2/r_1}U_{dc} \qquad (2)$$

The calculation of this equation employs the pseudo-potential method generally used in the radio frequency ion trap theory. This equation is formed of two parts on the right side including the first term representing the pseudo-potential due to the radio frequency and the second term the potential due to the electrostatic voltage. This is illustrated in Fig. 2. Specifically, the pseudo-potential applies the outward force from the center axis to the ions and has no effect on the polarity of the ions. The electrostatic voltage, on the other hand, is adapted to apply the force toward the center axis to the ions. The DC voltage Udc is positive in the case where positive ions are trapped, and negative in the case where negative ions are trapped. The potential equal to the sum of the two potentials, i.e. the potential given by Equation (2) is also shown in Fig. 2. As understood from Fig. 2, the potential of the one-dimensional ion trap according to this invention has a local minimum value, and from Equation (2), the position assuming the particular local minimum value is given by Equation (3) below.

$$r_{min} = \left( \frac{Ze}{2m\Omega^2} \frac{1}{\log r_2/r_1} \frac{V_{rf}^2}{U_{dc}} \right)^{1/2} \qquad (3)$$

In order to obtain the local minimum value, the polarity of Udc is of course required to be determined with respect to the polarity of ions as described above.

From Equation (3), it is understood that ions having a large m/z value are located inside near the center axis and ions having a small m/z value outside far from the center axis. In this way, with the one-dimensional ion trap according to this embodiment, it is understood that ions having different m/z values are trapped cylindrically at different radii. For this reason, this method is called the one-dimensional trap.

The range of m/z value in which ions can be trapped is determined by the values of the radio frequency voltage and the electrostatic voltage. In other words, ions that can be trapped have a stable area unique thereto. This fact is derived from the condition that "there must exist a stable point of ions given by Equation (3) between inner and outer electrodes; Otherwise, ions would bombard the electrodes". Specifically, the relation holds that

$$r_1 < r_{min} < r_2 \qquad (4)$$

The condition that the solid-cylindrical electrode is not bombarded by ions leads to Equation (5).

$$m_1 = \frac{ZeV_{rf}^2}{2\Omega^2 U_{dc}} \frac{1}{r_1^2 \log r_2/r_1} \qquad (5)$$

Also, the condition that the hollow- cylindrical electrode is not bombarded by ions leads to Equation (6) .

$$m_2 = \frac{ZeV_{rf}^2}{2\Omega^2 U_{dc}} \frac{1}{r_2^2 \log r_2/r_1} \qquad (6)$$

The ions existing within the area determined by these two values are actually trapped.

Based on this principle, an explanation is made in more detail according to the actual electrode size and voltage condition. The values described below are used as representative parameters to be substituted.

Radio frequency amplitude: 200 V (2 MHz)
DC voltage: 1 V
r1 = 2 mm
r2 = 20 mm
Length = 90 mm

Using these values of the device parameters, the value m/z = 13 - 1325 is obtained as a range of the mass in which ions can be trapped. This ion trap is considered applicable to various environmental pollution substances, illegal drugs and hazardous objects. In these applications, however, the valence number Z of ions often assumes unity, and therefore, ions having the molecular weight of about 13 to 1300 can be trapped. This range covers the molecular weight of all the molecules to be detected in these applications.

The ion trapping process along the direction of the center axis is explained. As described in " SUMMARY OF THE INVENTION" above, this invention discloses two means for trapping ions in the direction along the center axis.

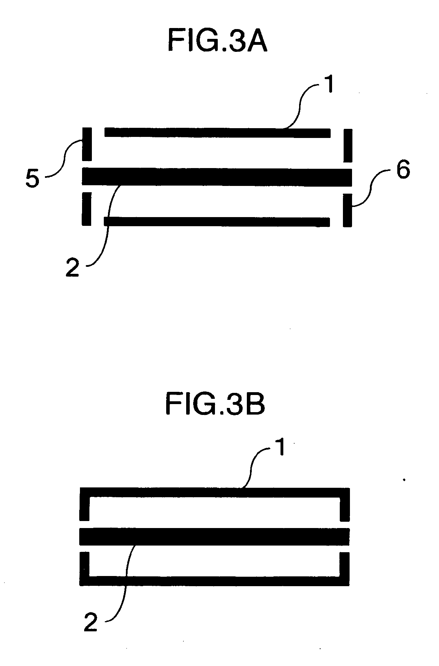

(1) Disk-shaped wall electrodes are arranged at the two ends and the ion leakage is prevented by applying a DC voltage (Fig. 3A)
(2) Wall electrodes conducting with the hollow-cylindrical electrode are added to short the electrode ends. As a result, the RF voltage is deformed, and an ion converging force is generated as a pseudo-potential (Fig. 3B).

According to the means (1) above, ions are trapped by applying a DC electric field to the wall electrodes by a DC voltage. In the means (2), on the other hand, the electromagnetic wave due to RF can be prevented from leaking out of the electrodes, and as compared with the means (1), the number of parts is reduced, thereby providing a method that can be implemented at low cost.

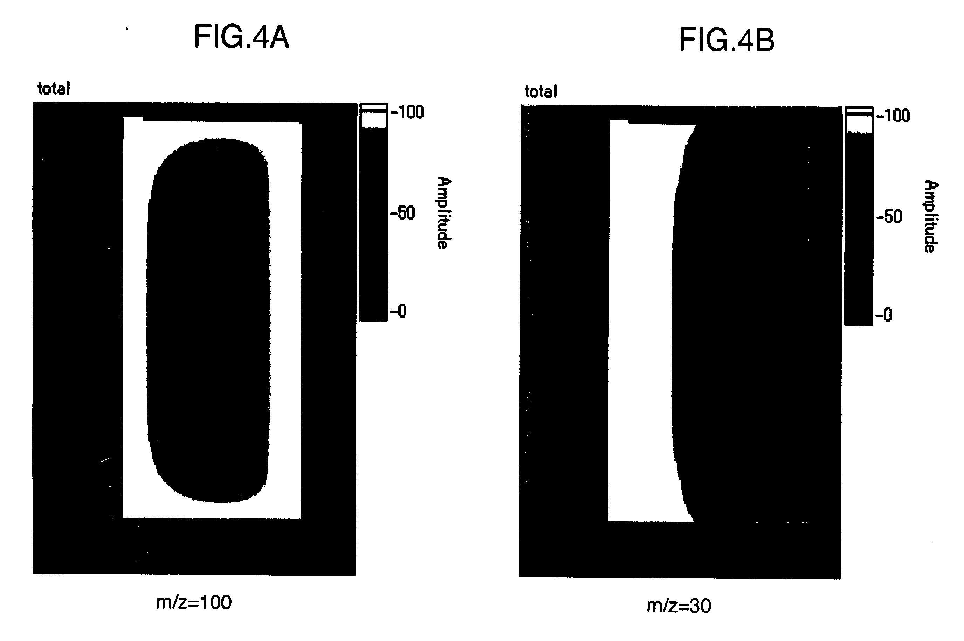

Figs. 4A and 4B show the potential determined by numerically calculating the potential applied in the form of the electrode shown in Fig. 3B and calculating the pseudo-potential as in Equation (2). The potential depth is indicated by the color density so that the color higher in density indicates a deep potential and the color lower in density a low potential. The calculation uses the representative device parameters described above.

It is understood from Fig. 4A that the bottom of the potential is separated from the end portion and that the potential for trapping ions is formed also in the direction of the center axis. It has been found, however, that with the decrease in m/z, the bottom of the potential is formed on the electrode and ions are lost as shown in Fig. 4B. This indicates that with the decrease in m/z, the outward potential due to radio frequency is increased and overcomes the inward force due to the electrostatic voltage, resulting in the loss of ions. Especially at the corner making up the bottom of the potential, the electric field is weak and the effect is great. After all, it has been found that this method can trap ions in the direction along the center axis but the mass area is somewhat reduced on the low mass side. This reduction, however, is very small and the effect thereof is considered substantially ignorable in application.

To summarize, the method according to this embodiment has the great features described below.

(1) Ions are converged on the surface of a cylinder having the radius given by Equation (3). In the conventional three-dimensional trap (what is called the Paul trap), on the other hand, ions are converged at one point. Also, in the conventional two-dimensional trap (what is called the linear ion trap), ions are converged on a straight line.

(2) Ions different in m/z are converged on the surfaces of cylinders different in radius. According to the Paul trap, on the other hand, ions having different m/z values are converged at the same point. Also, in the conventional linear ion trap, ions having different m/z values are converged on the same straight line.

These two features of the one-dimensional trap according to this invention makes it possible to reduce the mutual interaction between a plurality of ions and the spatial charge effect, as compared with the conventional methods, in an application to the mass spectrometry as described in the second embodiment.

Sample ions are most simply introduced from a hole formed in the hollow-cylindrical electrode. The ion trap according to this embodiment can be set to the vacuum degree of 1 Torr (0.01 Pa) which can be easily realized by what is called the roughing vacuum pump (the low vacuum pump such as the rotary pump or the diaphragm pump, the turbo molecular pump for realizing a high vacuum may not be used). In this case, the relation between vacuum degree and viscous resistance is such that the value of a typical ion mobility K is 0.8 to 2.4 cm^2/V/sec (for 14 to 500 amu @ ambient pressure).

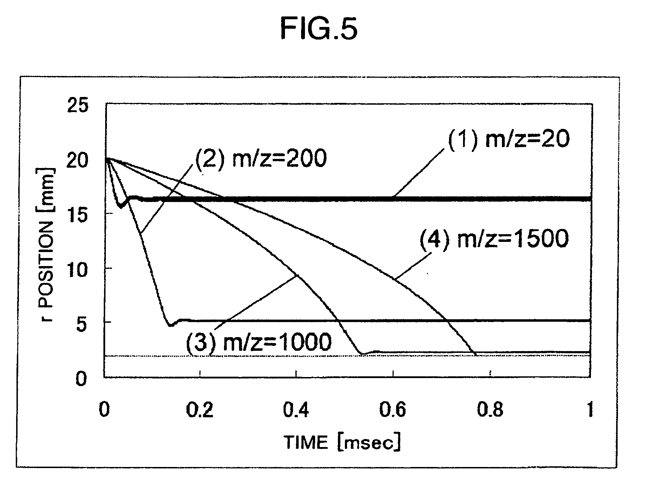

Fig. 5 shows the result of calculating the trajectory of ions introduced from the hollow-cylindrical electrode under the conditions specified by "Ion Mobility Spectrometry", G.A. Eicemann & Z. Karpas, CRC Press. 2005. In Fig. 5, (1) designates a case in which $m/z$ is 20, (2) a case in which $m/z$ is 200, (3) a case in which m/z is 1000, and (4) a case in which $m/z$ is 1500. With the ion trajectory in equilibrium, the radius at which ions are located is equal to the value given by Equation (3). In the case of (4) above, however, the conditions are unstable, and therefore, ions are lost by bombarding the electrodes. According to this calculation, ions are introduced at the rate of not more than 1 ms. Specifically, according to this method, ions are settled in about 1 ms, and therefore, a high-speed operation is made possible. Incidentally, the trajectory for $m/z = 20$ appears thick due to the forced vibration (what is called the micromotion) caused by radio frequency. A large micromotion blurs the position of ions and has an adverse effect on the mass resolution in mass spectrometry applications. The micromotion can be effectively reduced by increasing the radio frequency and reducing the value Udc. According to this embodiment, the frequency of not lower than 2 MHz is determined as a proper value. Ions can be introduced still faster by increasing Vrf and Udc and thus deepening the potential not to change the stable ion position. As seen from Equations (3), (5) and (6), the shape of the potential remains unchanged by holding the relation Vrf^2 ∝ Udc.

Incidentally, ions having a specified $m/z$ can also be isolated by use of Equations (3) and (4) in the one-dimensional ion trap according to this embodiment. Specifically, in accordance with the $m/z$ value of target ions, the radio frequency voltage or the electrostatic voltage is changed thereby to approach the stability boundary m1 (heavy side) or m2 (light side). With the approach to m1, a large $m/z$ value is excluded, while the approach to m2 eliminates ions having a small m/z value. Although the two stability boundaries cannot be approached at the same time, ions can be isolated by combining the two operations. The isolation resolution can be determined by the degree to which the m/z value of the target ions can approach a stability boundary.

[Second section]

An application of the one-dimensional ion trap which is not part of the invention as an analysis means is described. This application is based on the principle defined by Equations (3) and (4) for determining a stable area according to the first embodiment. Specifically, the instability in the trap conditions is utilized as a mass spectrometric analysis method. As described in " SUMMARY OF THE INVENTION" above, stable ions trapped are instabilized (i.e. instabilized in mass selectivity) by controlling and changing the voltage condition, and the electron current generated by bombarding the electrode is measured by the ampere meter. In this way, the m/z value and the quantity of the trapped ions are measured. This operation has the feature that the mass spectrometry conducted using the static stability conditions of ions makes possible the analysis independent of the gas pressure. Specifically, the operation is possible in low vacuum. The term "low vacuum" is generally defined as about 1 to $10^{-6}$ Torr, while the term "high vacuum" about $10^{-6}$ to $10^{-8}$ Torr. In the conventional method of mass spectrometric analysis operation, the resonance vibration of ions is utilized, and therefore, the bombardment of the gas has so large an effect on the resolution that the low-vacuum operation is impossible and a high vacuum is required. For carrying out the mass spectrometry using the one-dimensional ion trap according to this embodiment, two ion detection methods described below are available.

(A) The ion current is measured by mass selective bombardment of ions against the solid-cylindrical electrode.
(B) The ion current is measured by mass selective bombardment of ions against the hollow-cylindrical electrode.

Also, for carrying out the mass spectrometry using the one- dimensional ion trap according to this embodiment, three mass selective scanning methods described below are available.

(1) The radio frequency amplitude is scanned.
(2) The electrostatic voltage is scanned.
(3) The radio frequency is scanned. From these choices, six combinations are basically conceivable, and the superiority of any one of them over the others can be determined using the degree of the mass resolution as an index. According to this embodiment, the combinations of (A),(B) with (1)(2) are studied below. The parameters described above are used for calculations. In the case of (3), the mass selective scanning is made possible by scanning the frequency of the digital wave while maintaining a constant amplitude.

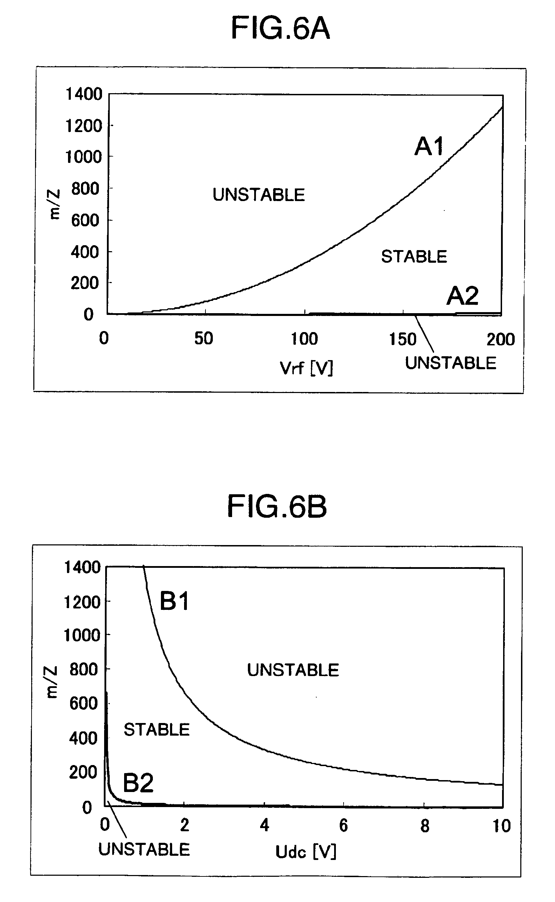

As to the criterion for superiority, a high mass resolution can be most easily achieved in the case where a linear result is obtained on a graph plotting a variable parameter along the abscissa and the mass at the stability-instability boundary along the ordinate. Thus, a case producing a substantially linear relation is selected. The calculation result is shown in Figs. 6A and 6B.

Fig. 6A shows the calculation result in the case where ions are detected by scanning the radio frequency amplitude. The line designated by A1 indicates the *m/z* value with ions bombarding the solid-cylindrical electrode 2 and the line designated by A2 the m/z value with ions bombarding the hollow-cylindrical electrode 1. The ions existing in the area defined by the two lines are stably trapped, while ions existing in other than this stable area bombard the solid-cylindrical electrode or the hollow-cylindrical electrode and fail to be trapped in stable condition.

Also, Fig. 6B shows the calculation result in the case where the electrostatic voltage is scanned to detect ions. The line designated by B1 represents the *m/ z* value with ions bombarding the solid- cylindrical electrode 2 and the line designated by B2 the m/z value with ions bombarding the hollow- cylindrical electrode 1. The ions existing in the area defined by the two lines are stably trapped, while the ions existing in other than this stable area bombard the solid-cylindrical electrode or the hollow- cylindrical electrode and fail to be trapped in stable condition.

As indicated by line Al, the calculation result for a method to detect the ion current with the solid-cylindrical electrode (inner electrode) while scanning the radio frequency amplitude due to this line is substantially linear and considered easy to detect. The mass spectrometric analysis operation is basically possible also by other methods. Line A2 represents a case in which the radio frequency amplitude is scanned to detect ions with the hollow-cylindrical electrode (outer electrode). The case is also applicable, though narrow in the mass range in which instability increases with respect to the scanning amount of the radio frequency amplitude. Line B1 represents a case in which the DC voltage is scanned to detect ions on the solid-cylindrical electrode. In this case, though applicable for detection, a slight voltage change in the high mass area greatly changes an unstable area, and therefore, a high resolution cannot be easily achieved with a high mass. Further, line B2 represents a case in which the DC voltage is scanned and the ion current is detected on the hollow-cylindrical electrode. Also this case, though difficult to achieve a high resolution, is applicable in spite of the fact that a slight parameter change results in a great change in unstable mass.

As described above, all the operation methods can basically produce a mass spectrum. From the viewpoint of the ease with which a resolution is easily secured, however, the method indicated by line A1 in which the radio frequency amplitude is scanned and ions are detected on the solid-cylindrical electrode (inner electrode) is considered the best embodiment. Also, the method indicated by line B1 in which the electrostatic voltage is scanned to detect ions on the solid-cylindrical electrode (inner electrode) is considered the next best embodiment.

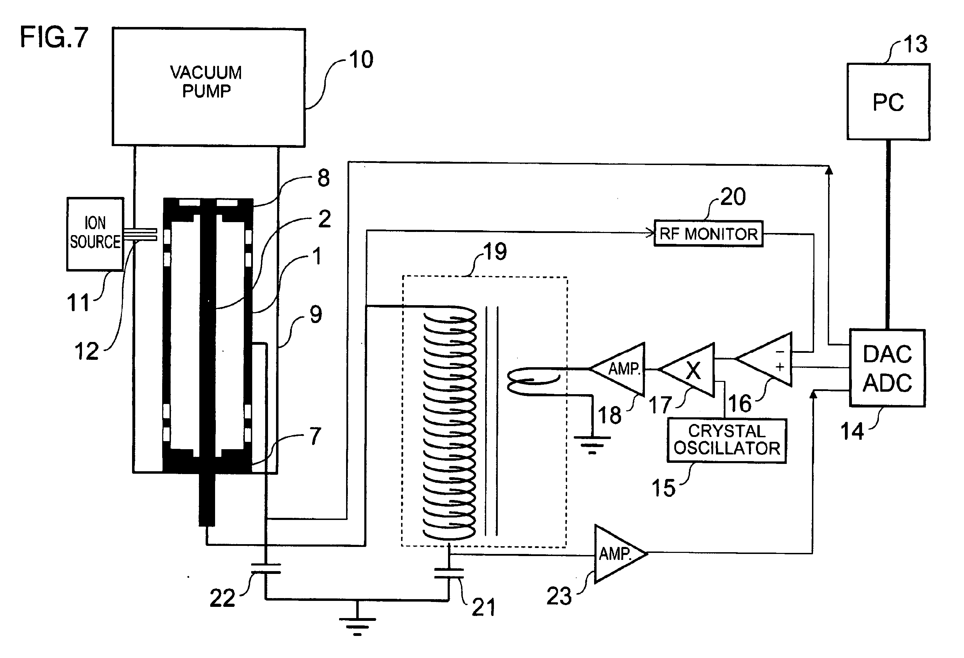

A system configuration for embodying the principle described above is shown in Fig. 7. The ion trap portion includes a hollow-cylindrical electrode 1, a solid-cylindrical electrode 2, insulating members 7, 8 for isolating the two electrodes from each other and supporting the solid-cylindrical electrode 2, a vacuum bath 9 for accommodating these trap electrodes, a vacuum pump 10, an ion source 11 and a pipe 12 for introducing the ions generated in the ion source to the vacuum bath. The radio frequency power supply 3 shown in Fig. 1 includes such elements as a oscillator 15, a multiplier 17, a radio frequency amplifier 18, a step-up radio frequency transformer 19, a RF amplitude monitor circuit 20, capacitors 21, 22 and a feedback amplifier 16. The current monitor circuit includes a current amplifier 23. The radio frequency amplitude and the electrostatic voltage are controlled and the current value read by a digital/analog converter 14 controlled by a computer 13. Incidentally, the vacuum pump 10 is a diaphragm pump.

Now, the circuit parts are explained. The radio frequency amplitude control voltage generated by the converter 14 in response to a command from the computer 13 is multiplied by the signal of the oscillator 15 through the feedback amplifier 16, and the amplitude- controlled radio frequency signal is input to the radio frequency amplifier 18. The power-amplified radio frequency signal is further amplified by the transformer 19 and input to the solid- cylindrical electrode 2. The amplitude of the voltage  at the output end of the transformer 19 is converted into a low electrostatic voltage and input to the feedback amplifier 16. This circuit, makings up a negative feedback circuit, is controlled in such a manner that the output voltage of the transformer 19 is always proportional to the control voltage output from the converter 14. Incidentally, the output signal of the oscillator 15 may assume a rectangular wave or, more preferably, a sinusoidal wave, . This is by reason of the fact that the transformer 19 and the ion trap electrode make up a resonance circuit and only the resonant sinusoidal wave component is amplified, so that the voltage applied to the ion trap actually assumes a sinusoidal wave.

The voltage generated by the converter 14 is input as an electrostatic voltage to the hollow-cylindrical electrode 1. In the process, the transformer 19 is connected using the capacitors 21, 22 so that the radio frequency power may not pass through the converter 14, while at the same time inserting an electric resistance (about 1 M$\Omega$) connected with the converter 14 as required. As a result, the radio frequency power locally exists between the transformer and the trap electrode. The ion current follows the route from the solid-cylindrical electrode 2 through the transformer to the current amplifier 23. The output of the current amplifier is analyzed by the computer through the converter 14.

The A1 mode described above is most preferable as an analysis process. The radio frequency amplitude is set to a value as large as about 200 V and the ions generated by the ion source are trapped. About one millisecond later, the ions enter an equilibrium state, and therefore, the radio frequency amplitude is scanned downward. Then, the outward force due to the radio frequency is reduced and the ions move toward the center. Once the ions bombard the electrode, the ion quantity is detected as an ion current. As described above, by measuring the ion current with respect to the radio frequency amplitude, a mass spectrum can be obtained. The radio frequency amplitude is converted to the *m/z* value of ions according to Equation (3).

[Third section]

An ion mobility analysis means is explained. A system configuration is similar to that of the second embodiment.

First, the mass analysis operation (second embodiment) is performed to determine the m/z value of target ions. Then, the ion species is isolated by the method described in the first embodiment. The isolated ions are set to a high voltage at a radio frequency amplitude to locate it in the neighborhood of the outside of the ion trap to lengthen the drift distance. Then, the voltage Vrf is turned off instantaneously,  and ions having a large ion mobility K bombard the solid-cylindrical electrode before the remaining ions. The time difference between the time during which the radio frequency is turned off and the time when the ion current is measured indicates the ion mobility. By using this operation, the two-dimensional measurement of the mass- to- charge ratio and the ion mobility of the specimen ions is made possible. Also, the ion mobility can be measured by detecting the current on the hollow- cylindrical electrode with the electrostatic voltage instantaneously turned off.

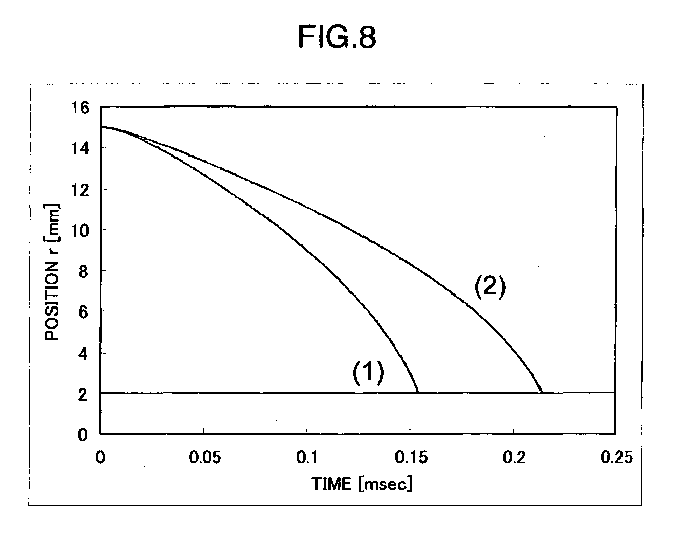

Fig. 8 shows two calculation results for 50 % different values of the ion mobility K. In this case, the ion m/z value is 200 and the electrostatic voltage of 1 V is applied. The trajectory shown in (1) is 50 % larger in ion mobility than the trajectory shown in (2). In this way, the time before reaching the surface of the solid-cylindrical electrode (indicated by dotted line) is varied with K, and therefore, ions different in mobility in spite of the same m/z value can be distinguished.

It should be further understood by those skilled in the art that although the foregoing description has been made on embodiments of the invention, the invention is not limited thereto and various changes and modifications may be made without departing from the scope of the appended claims.

**Claims**

1. An ion mobility analyzer comprising an ion trap including:

   an electrode unit having a solid-cylindrical electrode (2) and a hollow-cylindrical electrode (1) sharing the same axis as and surrounding the solid-cylindrical electrode (2),

power supplies (3, 4) for applying an AC voltage to one of the solid-cylindrical electrode and the hollow-cylindrical electrode and a DC voltage to the other, and
a control unit for controlling the voltage applied from the power supplies (3, 4), and
current detection means for detecting the current of the electrode unit,
**characterized in that**
the control unit is adapted to isolate the ions having a specified m/z value, and the current detection means is adapted to measure the current due to the isolated ions by turning off one of the DC and AC voltages applied from the power supplies (3, 4) but not both, thereby to measure the mobility of the ions trapped in the electrode unit.

2. The analyzer according to claim 1, wherein the control unit is adapted to turn off the DC voltage applied from the power supply (4) and the current detection means is adapted to measure the current of the hollow-cylindrical electrode (1).

3. The analyzer according to claim 1 or 2, wherein the control unit is adapted to turn off the AC voltage applied from the power supply (3) and the current detection means is adapted to measure the current of the solid-cylindrical electrode (2).

4. The analyzer according to any of claims 1 to 3, wherein a wall electrode (5, 6) is arranged at each end of the electrode unit, and an electrostatic voltage is applied to the wall electrodes from the power supply (4).

5. The analyzer according to any of claims 1 to 3, wherein the hollow-cylindrical electrode (1) includes a pair of wall electrodes shorted to the ends, respectively, of the hollow-cylindrical electrode (1), and an electrostatic voltage is applied to the wall electrodes from the power supply (4).

6. The analyzer according to any of claims 1 to 5, wherein the solid-cylindrical electrode (2) and the hollow-cylindrical electrode (1) each have a constant radius along the axial direction.

7. The analyzer according to any preceding claim, wherein the AC voltage is a radio frequency voltage.

8. The analyzer according to any preceding claim, wherein the ion trap further comprises a vacuum pump.

9. The analyzer according to any preceding claim, wherein
the AC voltage applied from the power supply (3) is scanned downward by the control unit while at the same time measuring the current through the current detection means, or
the DC voltage applied from the power supply (4) is scanned upward while at the same time measuring the current through the current detection means.

10. The analyzer according to any of claims 1 to 8, wherein
the control unit is adapted to control the frequency value of the AC voltage thereby to isolate ions having a specified $m/z$ range and trapped in the ion trap, or
the control unit is adapted to control the DC voltage value thereby to isolate ions having a specified $m/z$ range and trapped in the ion trap.

11. The analyzer according to claim 7, wherein the control unit is adapted to set the radio frequency to not lower than 2 MHz.

**Patentansprüche**

1. Ionenmobilitätsanalysator mit einer Ionenfalle, umfassend:

eine Elektrodeneinheit mit einer massivzylindrischen Elektrode (2) und einer hohlzylindrischen Elektrode (1), die die massivzylindrische Elektrode (2) umgibt und die gleiche Achse wie diese hat,
Leistungsversorgungen (3, 4) zum Anlegen einer Wechselspannung an die massivzylindrische Elektrode oder die hohlzylindrische Elektrode und einer Gleichspannung an die jeweils andere, und
eine Steuereinheit zum Steuern der aus den Leistungsversorgungen (3, 4) angelegten Spannung und
eine Stromerfassungseinrichtung zum Erfassen des Stroms der Elektrodeneinheit,
**dadurch gekennzeichnet, dass**

die Steuereinheit dazu ausgelegt ist, die Ionen mit einem spezifischen m/z-Wert zu trennen, und die Stromerfassungseinrichtung dazu ausgelegt ist, den durch die getrennten Ionen verursachten Strom zu messen, indem die aus den Leistungsversorgungen (3, 4) angelegte Gleich- oder Wechselspannung, aber nicht beide zugleich, abgeschaltet wird, um dadurch die Mobilität der in der Elektrodeneinheit gefangenen Ionen zu messen.

2. Analysator nach Anspruch 1, wobei die Steuereinheit dazu ausgelegt ist, die aus der Leistungsversorgung (4) angelegte Gleichspannung abzuschalten, und die Stromerfassungseinrichtung dazu ausgelegt ist, den Strom der hohlzylindrischen Elektrode (1) zu messen.

3. Analysator nach Anspruch 1 oder 2, wobei die Steuereinheit dazu ausgelegt ist, die aus der Leistungsversorgung (3) angelegte Wechselspannung abzuschalten, und die Stromerfassungseinrichtung dazu ausgelegt ist, den Strom der massivzylindrischen Elektrode (2) zu messen.

4. Analysator nach einem der Ansprüche 1 bis 3, wobei eine Wandelektrode (5, 6) an jedem Ende der Elektrodeneinheit angeordnet ist, und eine elektrostatische Spannung aus der Leistungsversorgung (4) an die Wandelektroden angelegt ist.

5. Analysator nach einem der Ansprüche 1 bis 3, wobei die hohlzylindrische Elektrode (1) ein Paar von Wandelektroden aufweist, die jeweils an die Enden der hohlzylindrischen Elektrode (1) kurzgeschlossen sind, und eine elektrostatische Spannung aus der Leistungsversorgung (4) an die Wandelektroden angelegt ist.

6. Analysator nach einem der Ansprüche 1 bis 5, wobei die massivzylindrische Elektrode (2) und die hohlzylindrische Elektrode (1) jeweils einen konstanten Radius entlang der Axialrichtung haben.

7. Analysator nach einem der vorstehenden Ansprüche, wobei die Wechselspannung eine Funkfrequenzspannung ist.

8. Analysator nach einem der vorstehenden Ansprüche, wobei die Ionenfalle ferner eine Vakuumpumpe aufweist.

9. Analysator nach einem der vorstehenden Ansprüche, wobei
die aus der Leistungsversorgung (3) angelegte Wechselspannung durch die Steuereinheit nach unten gefahren wird, während gleichzeitig der Strom durch die Stromerfassungseinrichtung gemessen wird, oder
die aus der Leistungsversorgung (4) angelegte Gleichspannung nach oben gefahren wird, während gleichzeitig der Strom durch die Stromerfassungseinrichtung gemessen wird.

10. Analysator nach einem der Ansprüche 1 bis 8, wobei
die Steuereinheit dazu ausgelegt ist, den Frequenzwert der Wechselspannung zu steuern, um dadurch Ionen zu trennen, die einen spezifischen m/z-Bereich aufweisen und in der Ionenfalle gefangen sind, oder
die Steuereinheit dazu ausgelegt ist, den Gleichspannungswert zu steuern, um dadurch Ionen zu trennen, die einen spezifischen m/z-Bereich aufweisen und in der Ionenfalle gefangen sind.

11. Analysator nach Anspruch 7, wobei die Steuereinheit dazu ausgelegt ist, die Funkfrequenz auf nicht weniger als 2 MHz einzustellen.

**Revendications**

1. Analyseur de mobilité d'ions comportant un piège à ions comprenant :

une unité d'électrode ayant une électrode cylindrique pleine (2) et une électrode cylindrique creuse (1) partageant le même axe que l'électrode cylindrique pleine (2) et entourant celle-ci,
des alimentations (3, 4) pour appliquer une tension en courant alternatif à l'une de l'électrode pleine cylindrique et de l'électrode cylindrique creuse et une tension en courant continu à l'autre,
une unité de commande pour commander la tension appliquée depuis les alimentations (3, 4), et
des moyens de détection de courant pour détecter le courant de l'unité d'électrode,
**caractérisé en ce que**
l'unité de commande est adaptée pour isoler les ions ayant une valeur m/z spécifiée et les moyens de détection de courant sont adaptés pour mesurer le courant dû aux ions isolés, en bloquant l'une des tensions en courant continu et en courant alternatif appliquées depuis les alimentations (3, 4) mais pas les deux, de manière à mesurer la mobilité des ions piégés dans l'unité d'électrode.

2. Analyseur selon la revendication 1, dans lequel l'unité de commande est adaptée pour bloquer la tension en courant continu appliquée depuis l'alimentation (4) et les moyens de détection de courant sont adaptés pour mesurer le courant de l'électrode cylindrique creuse (1).

3. Analyseur selon la revendication 1 ou 2, dans lequel l'unité de commande est adaptée pour bloquer la tension en courant alternatif appliquée depuis l'alimentation (3) et les moyens de détection de courant sont adaptés pour mesurer le courant de l'électrode cylindrique pleine (2).

4. Analyseur selon l'une quelconque des revendications 1 à 3, dans lequel une électrode de paroi (5, 6) est agencée au niveau de chaque extrémité de l'unité d'électrode, et une tension électrostatique est appliquée aux électrodes de paroi depuis l'alimentation (4).

5. Analyseur selon l'une quelconque des revendications 1 à 3, dans lequel l'électrode cylindrique creuse (1) comprend une paire d'électrodes de paroi court-circuitées aux extrémités, respectivement, de l'électrode cylindrique creuse (1), et une tension électrostatique est appliquée aux électrodes de paroi depuis l'alimentation (4).

6. Analyseur selon l'une quelconque des revendications 1 à 5, dans lequel l'électrode cylindrique pleine (2) et l'électrode cylindrique creuse (1) ont chacune un rayon constant le long de la direction axiale.

7. Analyseur selon l'une quelconque des revendications précédentes, dans lequel la tension en courant alternatif est une tension radiofréquence.

8. Analyseur selon l'une quelconque des revendications précédentes, dans lequel le piège à ions comporte en outre une pompe à vide.

9. Analyseur selon l'une quelconque des revendications précédentes, dans lequel
la tension en courant alternatif appliquée depuis l'alimentation (3) est balayée vers le bas par l'unité de commande alors qu'elle mesure en même temps le courant traversant les moyens de détection de courant, ou
la tension en courant continu appliquée depuis l'alimentation (4) est balayée vers le haut alors qu'elle mesure au même moment le courant traversant les moyens de détection de courant.

10. Analyseur selon l'une quelconque des revendications 1 à 8, dans lequel
l'unité de commande est adaptée pour commander la valeur de fréquence de la tension en courant alternatif de manière à isoler des ions ayant une plage m/z spécifiée et piégés dans le piège à ions, ou
l'unité de commande est adaptée pour commander la valeur de tension en courant continu de manière à isoler des ions ayant une plage m/z spécifiée et piégés dans le piège à ions.

11. Analyseur selon la revendication 7, dans lequel l'unité de commande est adaptée pour établir la radiofréquence à une valeur n'étant pas inférieure à 2 MHz.

# FIG.1

# FIG.2

FIG.3A

FIG.3B

# FIG.4A

total

Amplitude

-100

-50

-0

m/z=100

# FIG.4B

total

Amplitude

-100

-50

-0

m/z=30

# FIG.5

## FIG.6A

## FIG.6B

FIG.7

VACUUM PUMP 10

ION SOURCE 11

8
2
1
9
7
12
22
21
23

19

RF MONITOR 20

PC 13

AMP. 18 17
X 16
− +

CRYSTAL OSCILLATOR 15

DAC ADC 14

AMP.

EP 2 015 345 B1

# FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P2939952 A, Paul
- GB 2395355 A
- EP 1102986 A1

**Non-patent literature cited in the description**

- **R.E. MARCH ; R.J.HUGHES.** Quadrupole Storage Mass Spectrometry. John Wiley and Sons
- **RAYMOND E. MARCH ; JOHN F. TODD.** Quadrupole Ion Trap Mass Spectrometry. Wiley-Interscience
- **G.A. EICEMANN ; Z. KARPAS.** Ion Mobility Spectrometry. CRC Press, 2005